# FASCICULE DE BREVET EUROPEEN

(11) **EP 1 971 454 B1**
(45) Date de publication et mention de la délivrance du brevet: **16.02.2011**
(21) Numéro de dépôt: 06841896.1
(22) Date de dépôt: 08.12.2006
(51) Int. Cl.: B22F 9/18, C08G 83/00

(54) **SYNTHESE DE PARTICULES DANS DES STRUCTURES DENDRITIQUES**
PARTIKELSYNTHESE IN DENTRITISCHEN STRUKTUREN
SYNTHESIS OF PARTICLES IN DENDRITIC STRUCTURES

(30) Priorité: 23.12.2005 FR 0513274
(43) Date de publication de la demande: 24.09.2008
(73) Titulaire: CENTRE NATIONAL DE LA RECHERCHE SCIENTIFIQUE (CNRS), 75016 Paris (FR)
(72) Inventeur: AYMONIER, Cyril, F-33130 Begles (FR); CANSELL, François, F-33600 Pessac (FR); MECKING, Stefan, 78464 Konstanz (DE); MOISAN, Sandy, F-33000 Bordeaux (FR); MARTINEZ, Victor, 2517 BZ Den Haag (NL)
(74) Mandataire: Jacobson, Claude
(86) Numéro de dépôt international: PCT/FR2006/002691
(87) Numéro de publication internationale: WO 2007/080253

(56) Documents cités:
- WO-A-2005/054120
- SCOTT ROBERT W J ET AL: "Synthesis, characterization, and applications of dendrimer-encapsulated nanoparticles" J PHYS CHEM B; JOURNAL OF PHYSICAL CHEMISTRY B JAN 20 2005, vol. 109, no. 2, 20 janvier 2005 (2005-01-20), pages 692-704, XP002392164
- CANSELL FRANCOIS ET AL: "Review on materials science and supercritical fluids" CURR. OPIN. SOLID STATE MATER. SCI.; CURRENT OPINION IN SOLID STATE AND MATERIALS SCIENCE AUGUST/OCTOBER 2003, vol. 7, no. 4-5, août 2003 (2003-08), pages 331-340, XP002392165 cité dans la demande

## Description

L'invention a trait à un procédé de préparation d'une composition à base de particules et de structures dendritiques en milieux fluides, sous pression et à température, notamment en milieux fluides supercritiques, et aux compositions susceptibles d'être obtenues selon ce procédé. L'invention a trait également à l'utilisation de ces compositions, notamment à titre de catalyseur en synthèse organique.

L'invention a également trait à des structures dendritiques utiles pour la préparation des compositions selon l'invention.

Les voies classiques de synthèse de nanomatériaux dans des structures dendritiques (polymères hyperbranchés et dendrimères) fonctionnalisées ou non par des molécules hydrophiles, hydrophobes ou fluorées ont été présentées dans de nombreuses publications (Wilson et al., 2005 ; Schlotterbeck et al., 2004; Garcia-Bernabe et al., 2004). Selon cette approche, une première étape concerne la solubilisation de la structure dendritique et des réactifs dans un solvant approprié (polaire, apolaire ou fluoré), ensuite une étape de diffusion des réactifs dans le coeur de la structure dendritique puis une dernière étape, généralement de réduction. Des nanoparticules métalliques ont principalement été synthétisées.

La synthèse de nanomatériaux fonctionnels en milieux fluides supercritiques se fait généralement par une transformation chimique ou une transformation physique (Cansell et al., 2003; Jung et al., 2001). La synthèse de nanoparticules fonctionnelles par transformation chimique en milieux fluides supercritiques se fait en présence d'agents organiques de stabilisation et de fonctionnalisation et de précurseurs ou sels métalliques solubles dans le fluide dans les conditions étudiées :
- synthèse par transformation chimique en présence d'un agent de fonctionnalisation (Cansell et al., 2003; Korgel et al., 2003 ; Adischiri et al., 2005; Holmes et al., 2003; Ye et al., 2003; McLeod et al., 2004; Shah et al., 2004).
- synthèse dans des micelles inverses (Holmes et al., 2003; Ye et al., 2003).

De nombreuses études ont également été réalisées sur la synthèse de nanoparticules, principalement métalliques, en milieux fluides supercritiques dans des matrices polymères (Satoshi et al., 2004). Les matrices polymères sont constituées de chaînes macromoléculaires en dessous de leur température de transition vitreuse et non pas de structures dendritiques. Le fluide supercritique permet d'imprégner la matrice polymère des réactifs, du type précurseurs ou sels métalliques, qui vont permettre de synthétiser les nanoparticules; ces réactifs doivent être solubles dans le fluide supercritique dans les conditions étudiées. Ensuite, les nanoparticules sont généralement formées par un traitement thermique ou par une réduction en présence d'hydrogène, par exemple.

La mise en oeuvre de dendrimères en milieux fluides supercritiques a été réalisée principalement pour la catalyse (Wilson et al., 2005 ; Fahlman B. D., 2004 ; Dai L., 2005 ; Goetheer et al., 2000), la synthèse des nanoparticules dans le dendrimère ayant été réalisée par des voies classiques.

Les voies classiquement utilisées, notamment voies par chimie douce, pour synthétiser des nanoparticules dans des structures dendritiques ne sont pas versatiles (Scott et al., 2005 ; Garcia-Bernabé, 2004). Il faut adapter un procédé (choix du solvant, choix des réactifs et détermination des paramètres de synthèse tels la cinétique de la réaction mise en jeu) par système à synthétiser, le choix de la voie de synthèse devant tenir compte à la fois des propriétés de la structure dendritique utilisée et des nanoparticules à synthétiser. En fonction du solvant utilisé, le choix des réactifs va être plus au moins difficile ; des molécules compliquées peuvent être utilisées avec un risque de pollution de la particule finale. En ce qui concerne la synthèse de la particule, les systèmes classiques sont également limités sur :
- la nature de la nanoparticule : la synthèse de métaux et de semi-conducteurs est principalement rencontrée dans la littérature. Il est plus difficile de synthétiser des oxydes (par co-précipitation) et impossible de synthétiser des nitrures.
- la taille et distribution en taille sont généralement contrôlées par les caractéristiques du coeur de la structure dendritique. Pour ajuster la taille, il faut synthétiser de nouvelles structures dendritiques.
- la morphologie va dépendre de la nature de la nanoparticule synthétisée, des propriétés des structures dendritiques et de la cinétique de la réaction mise en jeu.

Le but de l'invention est de proposer un procédé versatile permettant de préparer différents types de nanomatériaux à partir d'un même système, notamment d'un même fluide. Ce but et d'autres sont atteints par l'invention.

Selon un premier aspect, l'invention a pour objet un procédé de préparation d'une composition à base de particules comprenant :
(i) la mise en contact d'un mélange comprenant une structure dendritique et un précurseur de composé métallique avec un fluide, dans des conditions de température et de pression telles que ledit mélange ne soit pas soluble dans ledit fluide, et
(ii) la transformation chimique du précurseur de composé métallique.

Par "composition à base de particules", on entend une composition comprenant des particules à base d'un ou de plusieurs composé(s) métallique(s) en association avec des structures dendritiques, identiques ou différentes.

Dans ce qui suit, on désignera par particule (P) les particules à base d'un ou de plusieurs composé(s) métallique(s), non associées à des structures dendritiques.

Ce procédé présente de nombreux avantages. Il est notamment particulièrement versatile et permet d'accéder à différents matériaux, tels que notamment des métaux, des semi-conducteurs, des oxydes, des nitrures et des carbures.

Il est en outre possible de synthétiser des particules à partir des structures dendritiques décrites dans la littérature scientifique ou disponibles commercialement, éventuellement des structures dendritiques modifiées par des molécules ou des macromolécules, telles que des matrices polymères, hydrophiles ou hydrophobes, en particulier fluorées. Ces structures dendritiques permettent avantageusement d'ajuster la solubilité des particules de composé métallique (P) dans tous types de milieux (hydrophiles ou hydrophobes).

Ce procédé permet en outre de contrôler la taille, la morphologie et/ou la structure des particules. La taille des particules peut être notamment contrôlée par la cinétique de la réaction mise en jeu dans le fluide sous pression ou à température. Il offre en outre la possibilité de récupérer des particules fonctionnelles sous la forme d'une poudre sèche ou d'une pâte, en fonction de la structure dendritique de départ, généralement non polluée et redispersable dans le milieu déterminé par l'application.

Enfin, ce procédé est un procédé versatile, avantageusement transposable à l'échelle industrielle.

### Structures dendritiques

Par « structure dendritique », on entend au sens de la présente description une macromolécule présentant une structure ramifiée susceptible d'être obtenue par polymérisation (ou copolymérisation) d'unités monomères organiques de fonctionnalité supérieure à 2. Les fonctions chimiques présentes aux extrémités des ramifications d'une telle structure sont désignées par le terme de "fonctions terminales". Par définition, le nombre de fonctions terminales sur un polymère dendritique est supérieur à 2.

Au sens de la description, les structures dendritiques peuvent être des dendrimères ou des polymères hyperbranchés.

Les dendrimères sont des macromolécules constituées de monomères qui s'associent selon un processus arborescent.

Les dendrimères, appelés aussi « molécules cascade », sont des polymères fonctionnels hautement ramifiés de structure définie. Ces macromolécules sont effectivement des polymères puisqu'elles sont basées sur l'association d'unités répétitives. Cependant, les dendrimères diffèrent fondamentalement des polymères classiques dans la mesure où ils ont des propriétés propres dues à leur construction en arborescence. Le poids moléculaire et l'architecture des dendrimères peuvent être précisément contrôlés.

Les dendrimères sont construits étape par étape, par l'itération d'une séquence de réaction permettant la multiplication de chaque unité répétitive et des fonctions terminales. Chaque séquence de réaction forme ce qui est appelé une « nouvelle génération ». La construction arborescente s'effectue par la répétition d'une séquence de réaction qui permet l'obtention à la fin de chaque cycle réactionnel d'une nouvelle génération et d'un nombre croissant de branches identiques et donc de fonctions terminales. Après quelques générations, le dendrimère prend généralement une forme globulaire hautement ramifiée et plurifonctionnalisée grâce aux nombreuses fonctions terminales présentes en périphérie.

Au sens de la présente invention, on entend par "polymères hyperbranchés" des matériaux polymériques polydispersés constitués de l'association d'unités répétitives comme celles composant les dendrimères, et qui présentent donc une structure comparable à celle des dendrimères. Les polymères hyperbranchés se différencient des dendrimères en ce que leur structure est davantage polydispersée et moins régulière. Leur synthèse est généralement plus facile et moins coûteuse que celle des dendrimères.

Des exemples de dendrimères ou de polymères hyperbranchés sont notamment les poly(amidoamine) (PAMAM), les polyéthylène imines (PEI), les poly(propylèneimine) (PPI), et les dendrimères de poly(propylène imine) dotriacontaamine (« polypropyleneimine dotriacontaamine dendrimer ») (DAB), lesquels sont disponibles commercialement, par exemple auprès de Sigma Aldrich.

D'autres exemples de polymères hyperbranchés sont notamment les polyphénylènes décrits par Y. H. Kim et O. W. Webster, les polyamides ou les polyesters à structure dendritique décrits dans les demandes WO 92/08749 ou WO 97/26294, les polyglycérols ou bien encore les polymères décrits dans les demandes WO 93/09162, WO 95/06080 ou WO 95/06081.

Les structures dendritiques peuvent être modifiées.

De préférence, les structures dendritiques selon l'invention sont des dendrimères ou des polymères hyperbranchés comprenant des fonctions amines secondaires (-NH-) ou primaires (-NH₂), hydroxyles (-OH), acide carboxylique (-COOH), halogène (Hal), telles que Cl, Br ou I, thiol (SH), plus préférentiellement des fonctions amines ou hydroxyles.

Ces fonctions amines ou hydroxyles peuvent en effet être avantageusement couplées avec des molécules comprenant des fonctions de type carbonyles (CO), telles que (-COOH), (-COHal) ou ester, par exemple (-COOAlk) pour conduire à l'obtention de dendrimères modifiées.

Par "structure dendritique modifiée", on entend, au sens de la présente description, des structures dans lesquelles les fonctions notamment terminales sont liées, en tout ou partie, de façon covalente ou non covalente, par des interactions ioniques ou de Van der Waals, à des molécules ou macromolécules, qui peuvent être hydrophiles ou hydrophobes. Ces structures dendritiques modifiées comprennent alors un "coeur" formé du dendrimère ou du polymère hyperbranché initial et une "écorce" formée par les molécules hydrophiles ou hydrophobes, dont notamment des molécules fluorées.

Par "molécules ou macromolécules hydrophiles", on entend des molécules solubles dans l'eau et les solvants polaires. Elles comprennent typiquement une ou plusieurs fonctions polaires, telles que OH, NH₂, OAlk, COOH. Des exemples de molécules hydrophiles utiles selon l'invention sont notamment les oligo- ou polysaccharides, par exemple la cellulose ou le dextrane, les polyéthers (polyéthylène glycol), polyalcools (polyvinyl alcool), polyacrylates (polycarboxyaltes) et des molécules possédant des fonctions anioniques ou cationiques, telles que des fonctions sulfate, phosphate ou ammonium.

Par "molécules ou macromolécules hydrophobes", on entend des molécules électriquement neutres et non polaires, non solubles dans l'eau. Les molécules hydrophobes utiles selon l'invention comprennent généralement une ou plusieurs longues chaînes aliphatiques linéaires ou ramifiées, saturées (alkyles) ou insaturées (alcényles ou alcynyles), notamment des chaînes aliphatiques ayant deux ou plusieurs atomes de carbone, notamment en C₅-C₂₀- Des exemples de molécules hydrophobes utiles selon l'invention sont notamment les acides gras ou les esters d'acides gras saturés ou insaturés.

Par "molécule fluorée", on entend un composé hydrophobe comprenant une ou plusieurs chaînes aliphatiques linéaires ou ramifées, saturées ou insaturées, poly- ou perfluorés, notamment des chaînes aliphatiques ayant deux ou plusieurs atomes de carbone, notamment en C₅-C₂₀.

Selon la présente invention, les groupes alkyles ou "Alk" représentent des groupes hydrocarbonés saturés, en chaîne droite ou ramifiée, comprenant de 1 à 30 atomes de carbone, de préférence de 5 à 20 atomes de carbone. On peut notamment citer, lorsqu'ils sont linéaires, les groupes méthyle, éthyle, propyle, butyle, pentyle, hexyle, octyle, nonyle, décyle, dodécyle, hexadécyle et octadécyle.

On peut notamment citer, lorsqu'ils sont ramifiés ou substitués par un ou plusieurs radicaux alkyle, les radicaux isopropyle, tert-butyl, 2-éthylhexyle, 2-méthylbutyle, 2-méthylpentyle, 1-méthylpentyle et 3-méthylheptyle.

Les molécules hydrophiles ou hydrophobes utiles selon l'invention comprennent en outre au moins une fonction susceptible de réagir avec l'une au moins des fonctions de la structure dendritique, notamment avec les fonctions terminales, lesquelles sont en général facilement accessibles.

Des exemples de telles fonctions sont notamment les fonctions -COOH, -COOAlk, -OH, -NH₂.

Comme exemples de liaisons covalentes pouvant être formées entre la structure dendritique et les molécules hydrophiles ou hydrophobes, on peut citer notamment les liaisons amides -(C=O)-NH-, -NH-(C=O), les liaisons ester -(C=O)-O-, -O-(C=O)-, -C-O-C-, -C-C-.

Comme exemples de molécules hydrophiles ou hydrophobes utiles selon l'invention, on peut plus particulièrement citer :
- les acides poly- ou perfluoroalcanoïques de formule RfCOOH, où Rf représente un groupe Alk, poly- ou perfluoré, notamment l'acide 2H, 2H, 3H, 3H perfluoroundécanoïque;
- les acides alkylcarboxyliques AlkCOOH, où Alk est un groupe alkyle en C₂-C₂₀;
- les polyoxyalkylène glycols ou les éthers de ceux-ci, tels que le tétraéthylèneglycol monométhyléther (HO₂HC-CH₂-(OCH₂CH₂)₃-OCH₃), le polyéthylène glycol.

De préférence, les molécules ou macromolécules liées à la surface des structures dendritiques ont une masse moléculaire allant de 50 à 10 000 g/mol, et plus préférentiellement de 200 à 1000 g/mol.

Les structures dendritiques modifiées utiles selon l'invention peuvent être préparées par application ou adaptation de toute méthode connue en soi et/ou à la portée de l'homme du métier permettant le greffage de molécules hydrophiles, hydrophobes ou fluorées, notamment celles décrites par Larock (Comprehensive Organic Transformations, VCH Publishers, 1989) ou par application ou adaptation des procédés décrits dans les exemples qui suivent (Rainer Haag, 2004; Stephan Mecking, 2002 et 2003; E. Meyer, 1996; Desimone J.M., 1997 ; R. M. Crooks, 1999).

### Précurseur de composé métallique

Par « précurseur d'un composé métallique», on entend un composé métallique comprenant un élément métallique Mⁿ¹ dans un état d'oxydation n1 supérieur ou égal à 0, généralement compris entre +1 et +6 selon la nature de l'élément métallique, qui, après transformation chimique, conduit à un composé comprenant l'élément métallique correspondant Mⁿ² à l'état d'oxydation n2, qui peut être identique ou différent de n1.

Par exemple, dans le cas où la transformation chimique est une réaction de réduction, le degré d'oxydation de n2 du composé métallique Mⁿ² obtenu sera inférieur ou égal au degré d'oxydation n1 du précurseur Mⁿ¹.

L'élément métallique M n'est pas critique et peut être tout élément métallique des groupes 1 à 15 du tableau périodique des éléments. L'expression "élément métallique" utilisée ici comprend aussi le bore, B. Des exemples des éléments métalliques comprennent, dans le tableau périodique des éléments, les éléments du groupe 1 (par exemple Li, Na, K), les éléments du groupe 2 (par exemple Mg, Ca, Sr, Ba), les éléments du groupe 3 (par exemple Sc, les éléments lanthanoïdes, les éléments actinoïdes), les éléments du groupe 4 (par exemple Ti, Zr, Hf), les éléments du groupe 5 (par exemple V), les éléments du groupe 6 (par exemple Cr, Mo, W), les éléments du groupe 7 (par exemple Mn), les éléments du groupe 8 (par exemple Fe, Ru), les éléments du groupe 9 (par exemple Co, Rh), les éléments du groupe 10 (par exemple Ni, Pd, Pt), les éléments du groupe 11 (par exemple Cu, Ag et Au), les éléments du groupe 12 (par exemple Zn), les éléments du groupe 13 (par exemple B, Al, In), les éléments du groupe 14 (par exemple Sn, Pb) et les éléments du groupe 15 (par exemple Sb, Bi).

Par extension, le terme "élément métallique" comprend aussi, au sens du présent exposé, les éléments du groupe 16 (par exemple S et Se).

Les éléments métalliques préférés comprennent les éléments de métaux de transition (les éléments des groupes 3 à 12 du tableau périodique des éléments). Parmi ceux-ci, les éléments des groupes 5 à 11 du tableau périodique des éléments sont préférés.

La valence de l'élément métallique n'est pas critique et elle peut être de 0 à 6, et elle est d'environ 2 ou 3 dans de nombreux cas.

Les composés métalliques et les précurseurs de ceux-ci comprennent, mais sans y être limités, les substances élémentaires, les hydroxydes, les oxydes (y compris les oxydes complexes), les halogénures (les fluorures, les chlorures, les bromures et les iodures), les sels d'oxoacides (par exemple les nitrates, les sulfates, les phosphates, les borates et les carbonates), les oxoacides, les isopolyacides, les hétéropolyacides, et d'autres composés minéraux des éléments métalliques mentionnés précédemment; les sels d'acides organiques (par exemple les sels de l'acide acétique, de l'acide propionique, de l'acide hydrocyanique, de l'acide naphténique et de l'acide stéarique), les complexes et d'autres composés organiques des éléments métalliques. Des ligands constituant les complexes englobent OH (hydroxo), les groupes alcoxy (par exemple les groupes méthoxy, éthoxy, propoxy et butoxy), les groupes acyle (par exemple, les groupes acétyle et propionyle), les groupes alcoxy-carbonyle (par exemple, les groupes méthoxycarbonyle et éthoxycarbonyle), acétylacétonate, le groupe cyclopentadiényle, les atomes d'halogène (par exemple, les atomes de chlore et de brome), CO, CN., l'atome d'oxygène, H₂O (aquo), les phosphines (par exemple, la triphénylphosphine et d'autres triarylphosphines), et d'autres composés du phosphore, NH₃ (amine), NO, NO₂ (nitro), NO₃ (nitrato), éthylènediamine, diéthylènetriamine, pyridine, phénanthroline et d'autres composés contenant un atome d'azote.

Des exemples concrets de composés métalliques et de précurseurs de ceux-ci utiles selon l'invention comprennent, en prenant les composés du cobalt comme exemples, l'hydroxyde de cobalt, l'oxyde de cobalt, le chlorure de cobalt, le bromure de cobalt, le nitrate de cobalt, le sulfate de cobalt, le phosphate de cobalt, et d'autres composés minéraux; l'acétate de cobalt, le naphténate de cobalt, le stéarate de cobalt, et d'autres sels d'acides organiques; l'acétylacétonate de cobalt et d'autres complexes, et d'autres composés du cobalt divalents ou trivalents.

Comme exemples de composés du vanadium ou de ses précurseurs utiles selon l'invention, on peut citer l'hydroxyde de vanadium, l'oxyde de vanadium, le chlorure de vanadium, le chlorure de vanadyle, le sulfate de vanadium, le sulfate de vanadyle, le vanadate de sodium, et d'autres composés minéraux; l'acétylacétonate de vanadium, l'acétylacétonate de vanadyle, et d'autres complexes, et d'autres composées du vanadium ayant une valence de 2 à 5.

Comme exemples de composés du palladium ou de ses précurseurs utiles selon l'invention, on peut citer notamment les composés minéraux du palladium, tels que le chlorure de palladium, les complexes du palladium tels que l'acétylacétonate de palladium, l'acétate de palladium, l'hexafluoro-acétylacétonate de palladium ou encore le nitrate de palladium.

Comme exemples de composés d'argent ou de précurseurs de celui-ci utiles selon l'invention, on peut citer les composés minéraux de l'argent tels que le chlorure d'argent, les complexes organométalliques de l'argent, tels que l'acétylacétonate d'argent (Ag(acac)), l'acétate d'argent, le nitrate d'argent ou encore le citrate d'argent.

D'autres exemples de composés d'éléments métalliques ou de précurseurs de ceux-ci comprennent les composés correspondant aux composés du cobalt, du vanadium, du palladium ou de l'argent mentionnés ci-dessus. Chacun des précurseurs de composés métalliques peut être utilisé seul ou en combinaison.

De préférence, le précurseur est un composé du palladium ou de l'argent.

Les précurseurs de composés métalliques mis en oeuvre selon le procédé de l'invention sont de préférence choisis parmi les précurseurs des métaux, des matériaux semi-conducteurs, des oxydes métalliques ou des nitrures.

Les composés métalliques obtenus par transformation chimique à partir des précurseurs selon le procédé de l'invention sont notamment les métaux, les oxydes métalliques, les matériaux semi-conducteurs, les nitrures et les carbures.

Les matériaux semi-conducteurs comprennent les éléments métalliques appartenant au groupe IV tels que le silicium, le germanium, l'étain gris (α-Sn); les semi conducteurs composés, en particulier les composés comprenant un élément du groupe III avec un élément du groupe V, par exemple l'arséniure de gallium (GaAs), le nitrure de gallium (GaN), l'antimoniure du gallium (GaSb), le phosphure de gallium (GaP), l'arséniure d'indium (InAs), le phosphure d'indium (InP), l'antimoniure d'indium (InSb), l'antimoniure d'aluminium (AlSb), le phosphure d'aluminium (AIP), l'arséniure d'aluminium (AIAs) ; les composés métalliques comprenant un élément du groupe II avec un élément du groupe V tels que : CdTe, CdS, ZnSe, ZnTe, MgS ; les composés métalliques comprenant un élément du groupe I avec un élément du groupe VII tels que : CuBr, CuCl, Cul.

Des exemples de nitrures métalliques pouvant être préparés selon le procédé de l'invention comprennent les nitrures de métaux de transition, notamment les éléments du groupe III, par exemple le GaN, AIN, InN, et du groupe IV, par exemple TiN, Zr, N, HfN, Si₃N₄, du groupe V, par exemple VN, NbN, TaN, ou encore du groupe VI, par exemple CrN, Cr₂N ou MnN.

Ces matériaux possèdent de nombreuses propriétés, notamment mécaniques, chimiques ou optiques, pouvant être exploitées pour des applications technologiques diverses. En général, ils ont la particularité d'être réfractaires et présentent des conductivités thermiques similaires à celles des métaux. Ils peuvent en outre présenter notamment une grande résistance à l'abrasion, une sélectivité optique très intéressante, une grande stabilité aux attaques chimiques et aux environnements réducteurs, ou encore des propriétés catalytiques proches de celles des métaux nobles.

Comme exemples d'oxydes métalliques pouvant être préparés selon l'invention, on peut citer les oxydes de fer, notamment les ferrites, en particulier la magnétite (Fe₃O₄) et la maghémite (γ-Fe₂O₃). Les nanoparticules de composition physiochimique entre la magnétite et la maghémite sont des substances superparamagnétiques et peuvent être utiles, notamment à titre d'agent de contraste pour l'imagerie par résonance magnétique.

### Transformation chimique

Le précurseur de composé métallique subit, dans une étape (ii) du procédé de l'invention, une transformation chimique qui peut être une thermolyse, une réaction d'oxydoréduction, une réaction sol-gel, ou solvothermale.

De préférence, la transformation chimique comprend une réaction d'oxydoréduction. Le mélange comprenant une structure dendritique et un précurseur de composé métallique est alors mis en contact avec un agent réducteur ou oxydant dans le fluide.

L'agent réducteur n'est pas critique et peut être choisi parmi les réactifs classiques. Des exemples d'agents réducteurs utiles selon l'invention sont notamment l'hydrogène, les hydrures métalliques, tels que les hydrures de métal alcalin ou alcalino-terreux, par exemple l'hydrure de sodium (NaH) ou de potassium (KH), NaBH₄, des superhydrures tels que NaBHL₃, L étant un ligand organique, ou encore CO, l'hydrogène étant particulièrement préféré.

De même, l'agent oxydant n'est pas critique et peut être choisi parmi l'oxygène, le peroxyde d'hydrogène, les peracides, l'oxygène étant particulièrement préféré.

De façon générale, on préfère les agents réducteurs ou oxydants qui sont à l'état gazeux dans les conditions de température et de pression du procédé selon l'invention. En effet, ils peuvent être facilement éliminés du milieu réactionnel à la fin de la réaction, notamment sans étape de purification supplémentaire.

### Le fluide

Par "fluide", on entend au sens du présent exposé un fluide sous pression et à température, de préférence dans des conditions supercritiques.

Par "fluide sous pression", on entend un fluide à une pression supérieure à 0,1 MPa, plus préférentiellement supérieure à 1 MPa, plus préférentiellement comprise entre 10 et 30 MPa.

Par "fluide "en température", on entend un fluide à une température supérieure à la température ambiante, plus préférentiellement supérieure à la température critique du fluide, de préférence comprise entre 80° et 250°C.

Les fluides supercritiques représentent une phase ou une pseudo phase présentant les caractéristiques à la fois d'un liquide et d'un gaz. Par "fluide supercritique", on entend au sens de la description un fluide qui se trouve dans des conditions de température et de pression supérieures à la température critique (Tc) et à la pression critique (Pc) respectivement.

Des exemples de fluides supercritiques utiles selon l'invention sont notamment le dioxyde de carbone (CO₂), le méthane, l'éthane, le propane, l'éthylène, le krypton, le xenon, l'éthanol, l'eau, l'acétone, l'ammoniaque, le N₂O, le CHF₃ ou un mélange de ceux-ci, le CO₂ étant particulièrement préféré.

De préférence, le fluide comprend du CO₂.

Le CO₂ est dit à l'état supercritique si la température est supérieure à 31°C et sa pression supérieure à 73,8.10⁵ Pa.

Dans ces conditions, le CO₂ présente à la fois les propriétés d'un gaz, telle sa grande diffusion, et acquiert celles d'un liquide, telle sa densité qui est de 0,7 kg/cm³ au point supercritique. Le CO₂ supercritique présente de nombreux avantages, dont notamment la possibilité de faire varier le pouvoir solvant dans des conditions modérées de températures (30°C), une grande variation de ce pouvoir solvant pour de faibles variations de pression. De plus, le CO₂ supercritique ne laisse aucun résidu toxique car il revient à l'état gazeux dans des conditions de température et de pression ambiante. En outre, le CO₂ est un gaz non toxique, ininflammable, abondant, peu onéreux et recyclable.

Dans le contexte de la présente invention, la température et la pression du fluide sont choisies de telle sorte que le mélange comprenant la structure dendritique et le précurseur du composé métallique ne soit pas soluble dans le fluide.

Ceci est rendu possible dans la mesure où, de manière générale, la solubilité d'un composé chimique dans un fluide est étroitement liée, d'une part, à la nature du composé et, d'autre part, à la masse volumique du fluide, laquelle dépend de la nature du fluide et des conditions de température et de pression. En adaptant les conditions de pression et de température du fluide, il est ainsi possible de contrôler la solubilité des réactifs dans le milieu et de se placer dans des conditions où les réactifs sont peu solubles voire insolubles.

Par "non soluble", on entend une solubilité du mélange dans le fluide inférieure à 10⁻²g/g et de préférence inférieure à 10⁻⁴g/g (le rapport g/g étant exprimé en gramme (g) de soluté/par gramme (g) de fluide).

Concernant les mélanges dans lesquels les structures dendritiques présentent une "écorce" fluorée, il est généralement admis que les molécules fluorées sont solubles dans le CO₂ supercritique. En revanche, la solubilité dans le CO₂ supercritique de structures dendritiques avec une écorce fluorée va dépendre de la nature de l'écorce, du rapport masse de l'écorce sur masse du coeur et de la masse volumique du fluide supercritique. Il s'avère que ces molécules ne vont être solubles que pour des densités élevées du CO₂ de l'ordre de 0,9-1.

Lorsqu'un agent chimique induisant la transformation chimique est mis en oeuvre à l'étape (ii), par exemple un agent réducteur ou oxydant, il peut être ou non soluble dans le fluide. De préférence, il est soluble pour qu'il puisse diffuser au sein du mélange comprenant la structure dendritique et le précurseur de composé métallique.

Sans vouloir se limiter à une théorie particulière, les inventeurs ont observé que le fluide permet de gonfler le mélange; il est ainsi possible d'ajuster la viscosité du mélange à partir des paramètres pression-température. Dans ces conditions, une réaction chimique va initier la transformation du précurseur et induire la formation des particules dont le contrôle de la taille va être étroitement lié à la viscosité du milieu. Ceci a été démontré par la connaissance des inventeurs sur le procédé de synthèse de nanomatériaux en milieux fluides supercritiques (Cansell et al., 2004). En effet, à partir d'une certaine taille, les particules ne croissent plus et vont être stabilisées par la structure dendritique, plus particulièrement par des interactions spécifiques avec certains atomes qui constituent le coeur de la structure dendritique du type S, N, O, ...

Comme exemples de mélanges de structures dendritiques et de précurseurs utiles selon l'invention, on peut citer ceux comprenant le Pd (acac)₂ et une structure dendritique choisie parmi le PEI-COCH₂CH₂Rf, PEI-CO-CH₂-CH₂-(OCH₂-CH₂)₃-OCH₃ ou encore le DAB-CO-CH₂CH₂Rf.

De préférence, le rapport molaire précurseur/structure dendritique selon le procédé est supérieur ou égal à 1, de préférence compris entre 10 et 200.

La durée de l'étape de transformation chimique du précurseur en composé métallique peut varier dans une large mesure en fonction de la cinétique de la réaction.

Typiquement, la transformation a lieu pendant une durée supérieure à 1 minute et est généralement comprise entre 15 minutes et 5 heures.

Plusieurs particules stabilisées par une seule structure dendritique peuvent se former selon la taille, l'architecture et la composition chimique de la structure dendritique. La composition de la structure dendritique peut par ailleurs influer sur l'interaction avec la particule de composé métallique. Inversement, le produit obtenu selon le procédé peut comprendre plusieurs structures dendritiques par particule de composé métallique. Il peut également y avoir une particule par structure dendritique.

Le procédé selon l'invention comprend de préférence la récupération de la composition à base de particules obtenue. La récupération peut être effectuée selon des méthodes classiques. A titre d'exemple, dans le cas où l'agent de transformation chimique est un gaz, à la fin de la réaction, le fluide supercritique ou gazeux et l'agent de transformation chimique peuvent être évacués de l'enceinte réactionnelle et une poudre sèche est récupérée. Lors de la décompression, la température est de préférence ajustée de manière à éviter le passage du fluide supercritique ou gazeux à l'état liquide.

Selon un autre aspect, on décrit ici des compositions à base de particules susceptibles d'être obtenues selon le procédé de l'invention.

Les particules (P) ont généralement un diamètre moyen compris entre 1 nm et 1 µm, de préférence entre 1 nm et 100 nm, et plus préférentiellement entre 1 et 10 nm. Le diamètre moyen des particules (P) selon l'invention fait référence au diamètre mesuré par microscopie électronique en transmission (MET)(notamment au moyen d'un microscope électronique à balayage haute résolution (FESEM)). Plus précisément, ce diamètre moyen est calculé en faisant la somme des diamètres moyens d'une population de particules, divisée par le nombre de particules constituant la population.

Les particules (P) ainsi obtenues peuvent être des matériaux composites et présenter différentes morphologies (par exemple, une forme sphérique, en feuillet, rhomboédrique).

Selon un autre aspect, on décrit ici l'utilisation des compositions à base de particules dans les domaines de l'électronique, la catalyse, la médecine, la biologie, l'optique, la cosmétique, les nanocomposites.

En particulier, les compositions à base de particules (P) ici décrites peuvent être utiles :
- pour la synthèse en chimie organique, notamment pour la catalyse, par exemple pour la catalyse colloïdale biphasique ;
- pour le revêtement de surfaces, par exemple pour réaliser un dépôt hydrophobe et/ou antibactérien sur une surface:
- à titre d'agent de contraste pour l'imagerie médicale, notamment pour l'IRM, lorsque la particule de composé métallique possède des propriétés magnétiques, notamment superparamagnétiques.

Dans ce dernier cas, il est particulièrement préféré de modifier les structures dendritiques avec des molécules ou macromolécules hydrophiles biocompatibles, tels que le PEG, de manière à empêcher la reconnaissance de la particule (P) par le système immunitaire.

Selon un autre aspect, on décrit ici une structure dendritique de formule (I): 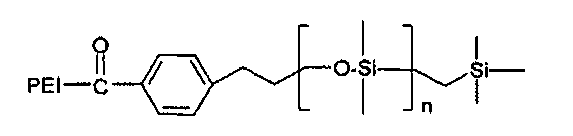 dans laquelle PEI désigne le polyéthylène imine et n est un entier, de préférence variant de 3 à 5.

Ces structures dendritiques sont utiles à titre d'intermédiaire de synthèse pour la préparation des compositions ici décrites.

### FIGURES

- La figure 1 représente le montage expérimental. Il est constitué des dispositifs d'introduction du fluide (cryostat et pompe haute pression) (1), du réacteur de synthèse équipé de contrôle de la pression (capteur de pression numérique, manomètre, disque de rupture et déverseur) et d'une régulation de la température (2) (couverture chauffante, thermocouples). Le système fonctionne en mode fermé ou semi continu.
- La figure 2 montre un histogramme représentant la taille des particules (nm) mesurée par MET, réalisé sur 690 nanoparticules à partir de Pd dans PEI-COCH₂CH₂R_{f}.
- La figure 3 montre un histogramme représentant la taille des particules (nm) mesurée par MET et réalisé sur 100 nanoparticules d'Ag dans PEI-COCH₂CH₂R_{f}.
   La figure 4 montre un histogramme représentant la taille des particules (nm) mesurée par MET et réalisé sur 226 nanoparticules de palladium dans DAB-COCH₂CH₂R_{f}.
- La figure 5 montre un histogramme représentant la taille des particules (nm) mesurée par MET et réalisé sur 146 nanoparticules de palladium dans PEI- CO-CH₂-(OCH₂CH₂)₃-OCH₃.

### EXEMPLES

Les exemples suivants illustrent l'invention sans toutefois la limiter.

Les produits de départ utilisés sont des produits connus ou préparés selon des méthodes connues.

### Matériel et méthodes

MET : Jeol 2000 FX;
XPS : Escalab 220 IXL (Vaccum Generator) ;
DRX: Conventional X-ray Powder Diffraction Cu-K_{α} radiation.
Les réactifs PEI, DAB ont été fournis par la société.

### Exemple 1:

### Nanoparticules de Pd et d'Ag dans du polyéthylèneimine modifié avec des molécules fluorées

### a) Synthèse de la structure dendritique

Dans cet exemple, la structure dendritique utilisée est un polymère hyperbranché (coeur-polyéthylèneimine (PEI) de masse molaire 5000 g/mol (PEI5k)) modifié par des molécules fluorées (écorce - « COCH₂CH₂Rf » avec Rf≡-(CF₂)₇CF₃).

L'acide 2H, 2H, 3H, 3H perfluoroundécanoïque (1,06 g, 2,16 mmol), dissous dans le THF (10 mL), est ajouté lentement à une solution de carbonyldiimidazol (338 mg, 2,09 mmol) dans le THF (10 mL). Le mélange est agité pendant 1 heure à température ambiante. Un flux d'argon est utilisé pour éliminer le CO₂ produit. Ensuite, le mélange est transféré dans une enceinte réactionnelle contenant le polyéthylèneimine (293 mg, 2,09 mmol de groupes « amino » terminaux). Le mélange réactionnel est chauffé à 40°C pendant une nuit. Le volume du solvant est réduit à 10 mL et 50 mL d'eau sont ajoutés. Un précipité blanc est isolé et lavé plusieurs fois. Après séchage sous vide, une poudre blanche est obtenue (480 mg, rendement de 83%).

Les résultats des caractérisations de cette structure dendritique (PEI-COCH₂CH₂R_{f}) sont les suivants:
¹H NMR (C₆F₆) δppm: 2.4-3.6 (m, NCH₂CH₂N and R_{f}CH₂dH₂CO). ¹³C NMR (C₆F₆) δppm: 27.2 (R_{f}CH₂CH₂CO) 29.0 (R_{f}CH₂CH₂CO) 39 (NCH₂CH₂NHCO) 50-55 (NCH₂CH₂N) 107-125 (CF₂) 173.5 (CH₂CONHCH₂). IR: N-H stretch 3306 cm⁻¹, C=O 1653 cm⁻¹, N-H bend 1559 and secondary amines 1451 cm⁻¹, C-F 1205, 1149 cm⁻¹.
98% des groupements "amine primaire" ont été transformés, soit 27% de l'ensemble des fonctions amines de la structure dendritique.

### b) Synthèse des nanoparticules de palladium (Pd) dans PEI-COCH₂CH₂R_{f}

Dans une expérience type, un mélange intime de PEI-COCH₂CH₂R_{f} (100 mg) et de précurseur de palladium, l'acétylacétonate de palladium (Pd(acac)₂-125 mg) est réalisé. Ces quantités correspondent à un ratio PEI-COCH₂CH₂R_{f} / Pd(acac)₂ (R) de 80. Ensuite, ce mélange est introduit dans le réacteur décrit précédemment puis 0,4 MPa d'hydrogène et du CO₂ (5 MPa) sont ajoutés. Le réacteur est chauffé à 100°C, la pression complétée à 15 MPa par ajout de CO₂ et le mélange réactionnel est maintenu dans ces conditions pendant 1 heure. La température est alors abaissée à 40°C puis le mélange réactionnel est décomprimé. Durant la phase de décompression, la température est maintenue à 40°C pour éviter de passer dans le domaine liquide du CO₂. Suite à la décompression, la température est ramenée à la température ambiante. Cette procédure permet de récupérer à la fin de l'expérience une poudre noire propre et sèche.

Dans ces conditions (15 MPa, 100°C), il a été vérifié par spectroscopie IR que les réactifs (PEI-COCH₂CH₂R_{f} et Pd(acac)₂) ne sont pas solubles dans le CO₂.

La poudre obtenue peut être re-dispersée dans le trifluoroéthanol, par exemple, et une solution colloïdale stable peut être formée. Ce type de nanoparticules fonctionnelles peut être utilisé pour réaliser de la catalyse biphasique. Différentes techniques de caractérisation des nanomatériaux ont été utilisées: microscopie électronique en transmission (MET), diffraction électronique, spectroscopie des photoélectrons X (XPS) et diffraction des rayons X sur poudre (DRX).

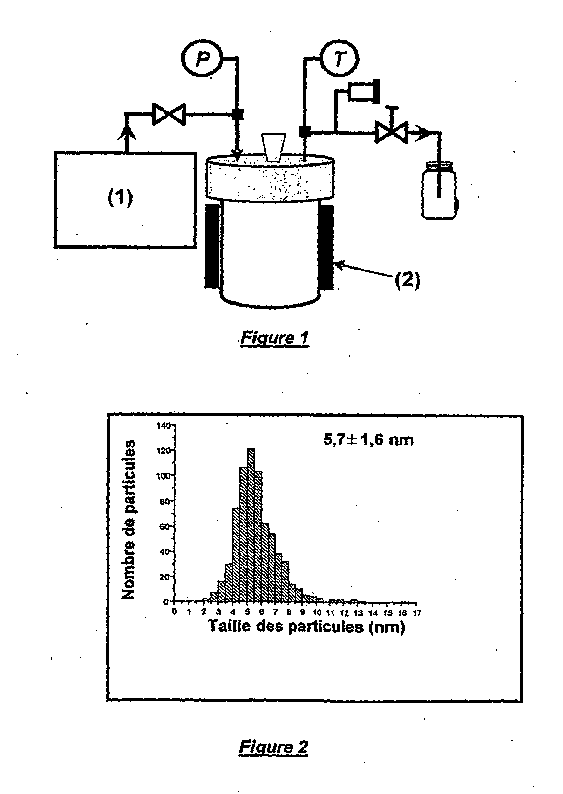

La Figure 2 représente une image MET et l'histogramme correspondant. La Figure 2 montre que des nanoparticules de palladium fonctionnelles de taille moyenne 5,7 nm ont été synthétisées. En l'absence de PEI-COCH₂CH₂R_{f}, on observe une agglomération des particules: ceci montre que la structure dendritique permet de stabiliser les nanoparticules.

La nature des nanoparticules a été vérifiée par XPS; en effet, l'analyse XPS montre que ce sont bien des nanoparticules de palladium qui ont été synthétisées.

Après 1 heure de temps de réaction, l'analyse XPS montre qu'il reste encore un peu de Pd(acac)₂ non réduit. En augmentant le temps de séjour dans le réacteur de synthèse à 3 heures, tout le précurseur est réduit en métal.

Enfin, les analyses structurales (DRX et diffraction électronique) confirment que du palladium métallique de structure cubique face centrée a bien été synthétisé.

En faisant varier les différents paramètres du procédé, pression, température, temps de séjour, rapport R et concentration en Pd(acac)₂, il est possible de contrôler la taille des nanoparticules de palladium fonctionnalisées par la structure dendritique de quelques nm à quelques dizaines de nm.

### c) Synthèse des nanoparticules d'argent (Ag) dans PEI-COCH₂CH₂R_{f}

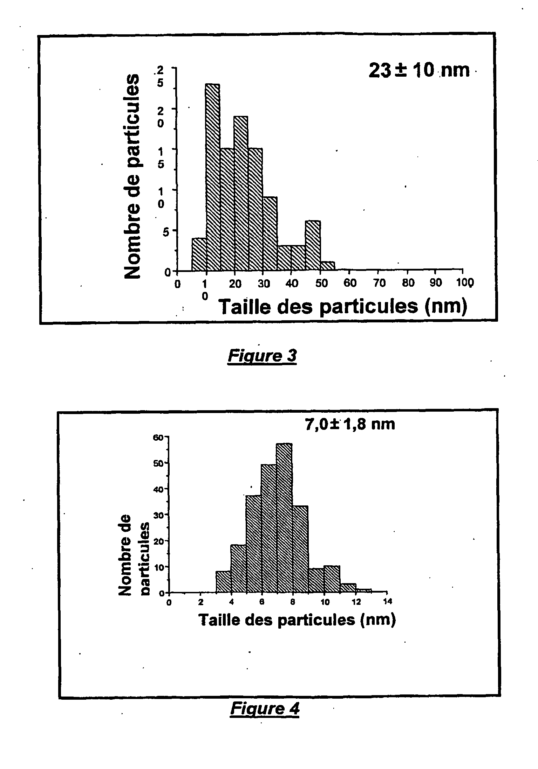

En partant d'un mélange intime de PEI-COCH₂CH₂R_{f} (100 mg) et de précurseur d'argent, l'acétate d'argent (Ag(ac)-67 mg) et du protocole expérimental présenté pour la synthèse de nanoparticules de palladium, des nanoparticules d'argent, bien cristallisées, de taille moyenne 23 nm ont été obtenues (Figure 3).

La poudre obtenue, sèche et propre, peut être redispersée dans des solvants fluorés et utilisée, par exemple, pour réaliser un dépôt hydrophobe et antibactérien sur une surface.

L'exemple 1 montre que la même approche permet de synthétiser différentes natures de matériaux stabilisés par la même structure dendritique. Les différences de taille entre les nanoparticules de palladium et celles d'argent peuvent s'expliquer par des différences dans les cinétiques de réduction et de croissance des deux types de matériaux.

### Exemple 2 :

### Nanoparticules de Pd dans du DAB modifié avec des molécules fluorées

Dans cet exemple, la structure dendritique utilisée est un dendrimère de 4^{e} génération (coeur-DAB de masse molaire 3500 g/mol modifié par des molécules fluorées et écorce - « COCH₂CH₂Rf » avec Rf≡-(CF₂)₇CF₃). Le protocole expérimental de modification du coeur est le même que celui présenté à l'exemple 1. 98% des groupements "amine primaire" ont été transformés. Les résultats de caractérisations de cette structure dendritique (DAB-COCH₂CH₂R_{f}) sont les suivants :
¹H NMR (C₆F₆) δppm: 2.4-3.6 (m, NCH₂CH₂N and R_{f}CH₂CH₂CO). ¹³C NMR (C₆F₆) δppm: 27.2 (R_{f}CH₂CH₂CO) 29.0 (R_{f}CH₂CH₂CO) 39 (NCH₂CH₂NHCO) 50-55 (NCH₂CH₂N) 107-125 (CF₂) 171.7 (CH₂CONHCH₂). IR: N-H stretch 3303 cm⁻¹, C=O 1650 cm⁻¹, N-H bend 1563, C-F 1204, 1149, 1112 cm⁻¹.

Il a été vérifié par spectroscopie IR que la structure dendritique, DAB-COCH₂CH₂R_{f}, n'est pas soluble dans le CO₂ à 15 MPa et 100°C.

En partant d'un mélange intime de DAB-COCH₂CH₂R_{f} (100 mg) et d'un précurseur de palladium, l'acétylacétonate de palladium (Pd(acac)₂ - 125 mg) et du protocole expérimental présenté pour la synthèse de nanoparticules de palladium dans PEI-COCH₂CH₂R_{f}, des nanoparticules de palladium, bien cristallisées, de taille moyenne 7 nm, ont été obtenues (Figure 4).

Les nanoparticules de palladium stabilisées dans du DAB-COCH₂CH₂R_{f} sont récupérées sous la forme d'une poudre sèche et propre et peuvent être redispersées dans des solvants fluorés, du type trifluoroéthanol, pour la catalyse colloïdale biphasique.

Cet exemple montre, en comparaison avec l'exemple 1, que la nature du coeur de la structure dendritique a une influence sur la taille finale des particules (Pd- PEI-COCH₂CH₂R_{f} → 5,7 nm et Pd - DAB-COCH₂CH₂R_{f} → 7,0 nm dans les mêmes conditions). La nature du coeur influence probablement la viscosité du système dans les conditions de pression et de température étudiées.

### Exemple 3 :

### Nanoparticules de Pd dans du polyéthylèneimine modifié avec des molécules hydrophobes

Dans cet exemple, la structure dendritique utilisée est un polymère hyperbranché (coeur-polyéthylèneimine (PEI) de masse molaire 5000 g/mol) modifié par des molécules hydrophobes (écorce - « COC₁₅H₃₁ »). Le protocole expérimental de modification du coeur est le même que celui présenté pour la modification du PEI par des molécules fluorées. 98% des groupements "amine primaire" ont été transformés. Les résultats de caractérisations de cette structure dendritique (PEI-COC₁₅H₃₁) sont les suivants:
¹H NMR (CDCl₃) δppm: : 0.83 (t, 3H, CH₃), 1,22 (m, 24H, CH₂) 1.57 (m, 2H, COCH₂CH₂) 2.11 (m, 2H, COCH₂CH₂) 2.4-2.8 (m, NCH₂CH₂N) 3.22 (m, CONCH₂CH₂N) 3.6 (m, NH). ¹³C NMR (CDCl₃) δppm: 14.3 (CH₃), 22.9, 29.6, 29.9 and 32.1 (CH₂), 26.2 (COCH₂CH₂) 36.7 (COCH₂CH₂) 33,4 (CONCH₂CH₂N) 37.7 (CONCH₂CH₂N) 47.4, 49.0, 51.5, 52.8 and 53.7 (NCH₂CH₂N) 174.0 (CH₂CONHCH₂). IR: 1645cm⁻¹.

Il a été vérifié par spectroscopie IR que la structure dendritique, PEI-CO C₁₅H₃₁. n'est pas soluble dans le CO₂ à 15 MPa et 100°C.

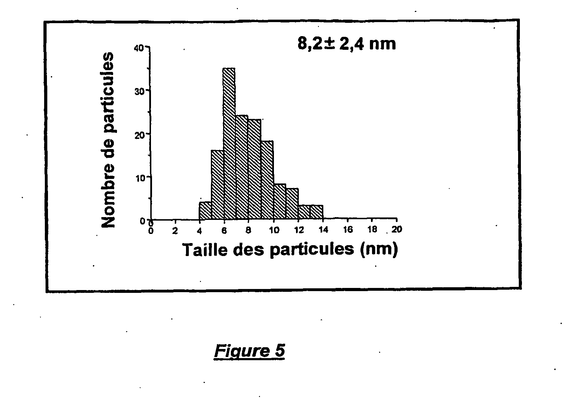

En partant d'un mélange intime de PEI-COC₁₅H₃₁ (100 mg) et de précurseur de palladium, l'acétylacétonate de palladium (Pd(acac)₂ -188 mg) et du protocole expérimental présenté pour la synthèse de nanoparticules de palladium dans PEI-COCH₂CH₂R_{f}, des nanoparticules de palladium, bien cristallisées, de taille moyenne 8,2 nm, ont été obtenues (Figure 5).

Les nanoparticules fonctionnelles sont, comme dans les exemples précédents, récupérées sous la forme d'une poudre propre, sèche et redispersable dans des solvants organiques du type toluène. Ce type de matériaux peut être utilisé pour la catalyse colloïdale.

Cet exemple montre qu'il est possible, avec le même procédé, de stabiliser des nanoparticules dans des structures dendritiques fonctionnalisées par des molécules hydrophobes.

### Exemple 4:

### Nanoparticules de Pd dans du polyéthylèneimine modifié avec des molécules hydrophiles

Dans cet exemple, la structure dendritique utilisée est un polymère hyperbranché (coeur-polyéthylèneimine (PEI) de masse molaire 5000 g/mol) modifié par des molécules hydrophiles (écorce - « CO-CH₂-(OCH₂CH₂)₃-OCH₃ »). Le protocole expérimental de modification du coeur est différent des précédents. Du tetraéthylèneglycol monométhyléther (2,08 g, 0,01 mol), de l'hydroxyde de potassium (1,12 g, 0,02 mol) et du permanganate de potassium (3,16 g, 0,02 mol) sont agités dans 100 ml d'eau à température ambiante pendant 12 heures. Le précipité marron obtenu est filtré puis lavé plusieurs fois avec de l'eau. Suite à la réduction du volume de la solution aqueuse à 50 ml, le produit est extrait avec du dichlorométhane. La solution organique est séchée sur Na₂SO₄ puis filtrée. Le solvant est évaporé- et conduit à l'acide 3,6,9-trioxadodecanoïque (1,4 g, rendement de 63%). Cette huile (1,22 g, 5,5 mmol) dissoute dans du THF (25 ml) est ajoutée doucement à une solution de carbonyldiimidazol (842 mg, 5,2 mmol). Le mélange réactionnel est agité 1 heure à température ambiante sous flux d'argon pour éliminer le CO₂. Ensuite le mélange est transféré dans un bécher contenant le polymère hyperbranché (PEI5k, 745 mg, 5,2 mmol de groupements « amino » terminaux). La réaction est chauffée à 40°C toute la nuit, le solvant est évaporé et le produit est purifié par dialyse dans l'eau (1,4 g, rendement de 80%). 98% des groupements "amine primaire" ont été transformés. Les résultats de caractérisations de cette structure dendritique (PEI-COCH₂(OCH₂CH₂)₃OCH₃) sont les suivants :
¹H NMR (CDCl₃) δppm: : 2.4-2.8 (m, NCH₂CH₂N) 3.33 (s, 3H, OCH₃), 3.6 (m, 12H, OCH₂CH₂O) 3.94 (m, 2H, COCH₂O). ¹³C NMR (CDCl₃) δppm: 59.2 (CH₃), 70-72 (OCH₂CH₂O), 70 (COCH₂O) 37 (CONCH₂CH₂N) 39.7 (CONCH₂CH₂N) 70-72 47, 49, 52 and 54 (NCH₂CH₂N) 170.3 (OCH₂CONHCH₂).

En partant d'un mélange intime de PEI-COCH₂(OCH₂CH₂)₃OCH₃ (100 mg) et de précurseur de palladium, l'acétylacétonate de palladium (Pd(acac)₂ - 203 mg) et du protocole expérimental présenté pour la synthèse de nanoparticules de palladium dans PEI-COCH₂CH₂R_{f}, des nanoparticules de palladium, bien cristallisées, de taille moyenne 6,1 nm, ont été obtenues.

Les nanoparticules fonctionnelles sont, comme dans les exemples précédents, récupérées sous la forme d'une poudre propre, sèche et redispersable dans des solvants aqueux. Ce type de matériaux peut être utilisé pour la catalyse colloïdale dans l'eau. Avec des nanoparticules du type oxyde de fer, ces matériaux pourraient être utilisés comme des agents de contraste IRM car les fonctions PEG autour du coeur dendritique les rendraient furtifs.

Cet exemple montre qu'il est possible, avec le même procédé, de stabiliser des nanoparticules dans des structures dendritiques fonctionnalisées par des molécules hydrophiles.

### REFERENCES

Wilson O.M., Crooks R.M., Synthesis, Characterization, and Applications of Dendrimer-Encapsulated Nanoparticles, Journal of Physical Chemistry B, 2005, 109 (2), 692-704.
Schlotterbeck U., Aymonier C., Thomann R., Hofmeister H., Tromp M., Richtering W., Mecking S., Shape-Selective Synthesis of Palladium Nanoparticles Stabilized by Highly Branched Amphiphilic Polymers, Advanced Functional Materials, 2004, 14, 999-1004.
Garcia-Bernabé A., Krämer M., Olàh B., Haag R., Syntheses and Phase-Transfer Properties of Dendritic Nanocarriers That Contain Perfluorinated shell Structures, Chemistry of European Journal, 2004, 10, 2822-2830.
Cansell F., Aymonier C., Loppinet-Serani A., Review on Materials Science and Supercritical Fluids, Current Opinion in Solid State & Materials Science, 2003, 7, 331-340.
Jung J., Perrut M., Particle Design using Supercritical Fluids: literature and patent survey, Journal of Supercritical Fluids, 2001, 20, 179-219.
Korgel B., Johnston K., Light-emitting nanoparticles and method of making same, WO 03/003982, 2003.
Adischiri T., Takami S., Umetsu M., Ohara S., Tsukada T., Supercritical hydrothermal synthesis of nanoparticles, Ceramic Transactions, 2005, 146, 3-10.
Holmes J.D., Lyons D.M., Ziegler K.J., Supercritical Fluid Synthesis of Metal and Semiconductor Nanomaterials, Chemistry - A European Journal, 2003, 9, 2144-2150.
Ye X., Wai C.M., Making Nanomaterials in Supercritical Fluids: A Review, Journal of Chemical Education, 2003, 80 (2), 198-204.
McLeod M.C., Gale W.F., Roberts C.B., Metallic Nanoparticle Production utilizing a Supercritical Carbon Dioxide Flow Process, Lagmuir, 2004, 20 (17), 7078-7082.
Shah P.S., Hanrath T., Johnston K.P., Korgel B.A., Nanocrystal and Nanowire Synthesis and Dispersibility in Supercritical Fluids, Journal of Physical Chemistry B, 2004, 108 (28), 9574-9587.
Satoshi Y., Hiroyuki S., Yuko U., Katsuto O., Kenji H., Atsushi H., Tomoya T., Toshihiko N., Gas separation membrane and method for manufacturing the same, 2004, JP2004275986.
Satoshi Y., Atsushi H., Hiroyuki S., Yuko U., Kenji H, Tomoya T., Katsuto O., Preparation of a platinum and palladium/polyimide nanocomposite film as a precursor of metal-doped carbon molecular sieve membrane via supercritical impregnation, Chemistry of Materials, 2004, 16, 2363 and les publications citées en références.
Fahlman B.D., Low temperature synthesis of carbon nanotubes by catalytic décomposition of halogenated hydrocarbons, 2004, WO 2004103904.
Dai L., Low température, controlled synthesis of carbon nanotubes, Small, 2005, 1(3), 274.
Goetheer E.L.V., Baars M.W.P.L., Van den Broeke L.J.P., Meijer E.W., Keurentjes J.T.F., Functionalized poly(propylene imine) dendrimers as novel phase transfer catalyst in supercritical carbon dioxide, Industrial&Engineering Chemistry Research, 2000, 39(12), 4634.
R.W.J. Scott, O.M. Wilson, R.M. Crooks, Synthesis, characterization, and application of dendrimer-encapsulated nanoparticles, Journal of Physical Chemistry B, 2005, 109 (2), 692
A. Garcia-Bernabe, M. Kraemer, B. Olah, R. Haag, Syntheses and phase-transfer properties of dendritic nanocarriers that contain perfluorinated shell structures, Chemistry-A European Journal, 2004, 10 (11), 2822; c) U. Schlotterbeck, C. Aymonier, R. Thomann, H. Hofmeister, M. Tromp, W. Richtering, S. Mecking, Shape-Selective Synthesis of Palladium Nanoparticles Stabilized by Highly Branched Amphiphilic Polymers, Advanced Functional Materials, 2004, 14, 999.
Y. H. Kim et O. W. Webster, Macromolecules, vol. 25, pp. 5561-5572 (1992).
F. Cansell, C. Aymonier, A. Loppinet-Serani, Review on materials science and supercritical fluids, Curr. Opin. Solid State Mater. Sci., 2003, 7, 331 ; b) S. Desmoulins-Krawiec, Elaboration de particules nanostructures de nitrures et d'oxynitrures métalliques en milieu fluide supercritique. Etude et modélisation des mécanismes de croissance des particules, Thèse de l'université Bordeaux I, 2004.
Rainer Haag, Chem. Eur. J., 2004, vol. 10, p. 2822.
Stephan Mecking, Adv. Synt. Catal., 2003, 345, p. 333 and Chem. Commun., 2002, 3018.
E. Meyer, JACS, 1996, 118, 73-98.
Desimone J. M., Nature, 1997, 389, p. 368.
R. M. Crooks, JACS, 1999, 121, p. 4910.

## Revendications

1. Procédé de préparation d'une composition à base de particules, comprenant :
(i) la mise en contact d'un mélange comprenant une structure dendritique et un précurseur de composé métallique dans un fluide, dans des conditions de température et de pression telles que ledit mélange ne soit pas soluble dans ledit fluide; et
(ii) la transformation chimique du précurseur de composé métallique.

2. Procédé de préparation selon la revendication 1, dans lequel le procédé comprend la récupération de la composition à base de particules obtenue.

3. Procédé de préparation selon les revendications 1 à 2, dans lequel la structure dendritique est un polymère hyperbranché ou un dendrimère.

4. Procédé de préparation selon la revendication 3, dans lequel la structure dendritique est choisie parmi les poly(amidoamine) (PAMAM), les polyéthylène-imines (PEI), les poly(propylèneimine) (PPI), et les dendrimères de poly(propylèneimine) dotriacontaamine (DAB).

5. Procédé de préparation selon les revendications 1 à 4, dans lequel les structures dendritiques sont modifiées par des molécules hydrophiles ou hydrophobes.

6. Procédé de préparation selon la revendication 5, dans lequel les molécules hydrophiles ou hydrophobes sont choisies parmi :
- RfCOOH, où Rf représente un groupe poly- ou perfluoro alkyle linéaire ou ramifié ;
- Alk-COOH, Alk désignant un groupe alkyle linéaire ou ramifié en C₂-C₂₀;
- les polyoxyalkylène glycols ou les éthers de ceux-ci.

7. Procédé de préparation selon les revendications 1 à 6, dans lequel le précurseur de composé métallique est choisi parmi les précurseurs des métaux, des matériaux semi-conducteurs, des oxydes métalliques ou des nitrures.

8. Procédé de préparation selon la revendication 7, dans lequel le précurseur est un composé du palladium ou de l'argent.

9. Procédé de préparation selon les revendications 1 à 8, dans lequel le fluide comprend du CO₂.

10. Procédé de préparation selon l'une des revendications 1 à 9, dans lequel la pression est comprise entre 10 et 30 MPa.

11. Procédé de préparation selon l'une des revendications 1 à 10, dans lequel la température est comprise entre 80° et 250°C.

12. Procédé de préparation selon les revendications 1 à 11, dans lequel le rapport molaire précurseur/structure dendritique est compris entre 10 et 200.

13. Procédé selon les revendications 1 à 12, dans lequel la transformation chimique est une réaction de thermolyse, d'oxydoréduction, sol-gel ou solvothermale.

14. Procédé selon la revendication 13, dans lequel la transformation chimique est une réaction d'oxydoréduction.

15. Procédé selon la revendication 14. dans lequel la réaction d'oxydoréduction est réalisée en présence d'hydrogène.

## Claims

1. Process for the preparation of a particle-based composition, comprising:
(i) bringing a mixture comprising a dendritic structure and a metal compound precursor into contact with a fluid, under conditions of temperature and pressure such that said mixture is not soluble in said fluid; and
(ii) chemically converting the metal compound precursor.

2. Preparation process according to claim 1, wherein the process includes recovery of the particle-based composition obtained.

3. Preparation process according to claims 1 to 2, wherein the dendritic structure is a hyperbranched polymer or a dendrimer.

4. Preparation process according to claim 3, wherein the dendritic structure is selected from poly(amidoamine)s (PAMAMs), polyethylene-imines (PEIs), poly(propyleneimine)s (PPIs), and poly(propyleneimine) dotriacontaamine (DAB) dendrimers.

5. Preparation process according to claims 1 to 4, wherein the dendritic structures are modified by hydrophilic or hydrophobic molecules.

6. Preparation process according to claim 5, wherein the hydrophilic or hydrophobic molecules are selected from:
- RfCOOH, wherein Rf represents a linear or branched poly- or per-fluoroalkyl group;
- Alk-COOH, Alk denoting a linear or branched C₂-C₂₀alkyl group;
- polyoxyalkylene glycols or ethers thereof.

7. Preparation process according to claims 1 to 6, wherein the metal compound precursor is selected from precursors of metals, of semi-conductor materials, of metal oxides, or of nitrides.

8. Preparation process according to claim 7, wherein the precursor is a palladium or silver compound.

9. Preparation process according to claims 1 to 8, wherein the fluid comprises CO₂.

10. Preparation process according to one of claims 1 to 9, wherein the pressure is between 10 and 30 MPa, inclusive.

11. Preparation process according to one of claims 1 to 10, wherein the temperature is between 80° and 250°C, inclusive.

12. Preparation process according to claims 1 to 11, wherein the molar ratio of precursor/dendritic structure is between 10 and 200, inclusive.

13. Process according to claims 1 to 12, wherein the chemical conversion is a thermolysis, redox, sol-gel or solvothermal reaction.

14. Process according to claim 13, wherein the chemical conversion is a redox reaction.

15. Process according to claim 14, wherein the redox reaction is carried out in the presence of hydrogen.

## Patentansprüche

1. Herstellungsverfahren für eine Zusammensetzung auf der Basis von Partikeln, das folgendes aufweist:
(i) In-Kontakt-Bringen eines Gemisches, das eine dendritische Struktur aufweist, und eines Vorläufers einer metallischen Verbindung in einem Fluid unter solchen Temperatur- und Druckbedingungen, dass das Gemisch in dem Fluid nicht löslich ist, und
(ii) die chemische Transformation des Vorläufers einer metallischen Verbindung.

2. Herstellungsverfahren nach Anspruch 1,
wobei das Verfahren die Gewinnung der erhaltenen Zusammensetzung auf der Basis von Partikeln umfasst.

3. Herstellungsverfahren nach den Ansprüchen 1 bis 2,
wobei die dendritische Struktur ein hyperverzweigtes Polymer oder ein Dendrimer ist.

4. Herstellungsverfahren nach Anspruch 3,
wobei die dendritische Struktur aus Poly(amidoamin) (PAMAM), Polyethylen-iminen (PEI), Poly(propylenimin) (PPI) und Dendrimeren von Poly(propylenimin)-dotriacontaamin (DAB) ausgewählt ist.

5. Herstellungsverfahren nach den Ansprüchen 1 bis 4,
wobei die dendritischen Strukturen durch hydrophile oder hydrophobe Moleküle modifiziert sind.

6. Herstellungsverfahren nach Anspruch 5,
wobei die hydrophilen oder hydrophoben Moleküle aus folgendem ausgewählt sind:
- RfCOOH, wobei Rf eine lineare oder verzweigte Poly- oder PerfluoralkylGruppe darstellt;
- Alk-COOH, wobei Alk eine lineare oder verzweigte C₂-C₂₀-Alkyl-Gruppe bezeichnet;
- Polyoxyalkylenglykolen oder Ethern von diesen.

7. Herstellungsverfahren nach den Ansprüchen 1 bis 6,
wobei der Vorläufer einer metallischen Verbindung unter Vorläufern von Metallen, Halbleitermaterialien, Metalloxiden oder Nitriden ausgewählt ist.

8. Herstellungsverfahren nach Anspruch 7,
wobei der Vorläufer eine Verbindung von Palladium oder Silber ist.

9. Herstellungsverfahren nach den Ansprüchen 1 bis 8,
wobei das Fluid CO₂ aufweist.

10. Herstellungsverfahren nach einem der Ansprüche 1 bis 9,
wobei der Druck zwischen 10 und 30 MPa liegt.

11. Herstellungsverfahren nach einem der Ansprüche 1 bis 10,
wobei die Temperatur zwischen 80 °C und 250 °C liegt.

12. Herstellungsverfahren nach den Ansprüchen 1 bis 11,
wobei das Molverhältnis Vorläufer/dendritische Struktur zwischen 10 und 200 liegt.

13. Verfahren nach den Ansprüchen 1 bis 12,
wobei die chemische Transformation eine Thermolysereaktion, eine Redoxreaktion, eine Sol-Gel-Reaktion oder eine solvo-thermische Reaktion ist.

14. Verfahren nach Anspruch 13,
wobei die chemische Transformation eine Redoxreaktion ist.

15. Verfahren nach Anspruch 14,
wobei die Redoxreaktion in Gegenwart von Wasserstoff durchgeführt wird.
